# EUROPÄISCHE PATENTANMELDUNG

(11) **EP 0 774 741 A1**
(43) Veröffentlichungstag der Anmeldung: **21.05.1997**
(21) Anmeldenummer: 96114444.1
(22) Anmeldetag: 10.09.1996
(51) Int. Cl.: G08B 15/00, F21M 1/00, H04N 5/225

(54) **Überwachungseinrichtung**

(30) Priorität: 15.11.1995 DE 19542481
(71) Anmelder: DORNIER GmbH, D-88039 Friedrichshafen (DE)
(72) Erfinder: Scherbarth, Stefan, Dr., Kanata, Ontario K2K 1H1 (CA)
(74) Vertreter: Meel, Thomas

(57) **Zusammenfassung**

Die Erfindung betrifft eine Überwachungseinrichtung, insbesondere für Aussenanlagen, mit IR-Scheinwerfer (1) und Videokamera (3), wobei IR-Scheinwerfer (1) und Videokamera (3) derart baulich integriert sind, daß die Verlustwärme des Scheinwerfers zur Heizung der Videokamera (3) und der Frontscheibe (5) eingesetzt wird.

## Beschreibung

Die Erfindung betrifft eine Überwachungseinrichtung, insbesondere für Außenanlagen, die eine Kamera sowie eine Infrarotbeleuchtungseinheit umfaßt.

In der Sicherheitstechnik werden zur Überwachung von Außenanlagen Videokameras eingesetzt. Um auch nachts eine Überwachung zu ermöglichen wird neben einer Kamera häufig ein Scheinwerfer zur Ausleuchtung der Überwachungsstrecke eingesetzt. Für verdeckten, unauffälligen Einsatz werden hierbei Infrarotscheinwerfer verwendet, deren Licht zwar für die Videokamera nicht aber für das menschliche Auge wahrnehmbar ist. Derartige Überwachungseinrichtungen sind aus der **DE 40 33 260 C1 und der DE 41 00 654 A1** bekannt.

Solche Vorrichtungen sind sowohl hinsichtlich der Gerätetechnik wie auch der Installation und Inbetriebnahme aufwendig:
Für Allwetterbetrieb müssen Kamera und Scheinwerfer sowie ein eventuelles Netzteil in spezielle wetterfeste Gehäuse eingebaut sein; die Kamerascheibe muß zum Vermeiden von Beschlagen bei niedrigen Temperaturen (<10°C) geheizt werden; bei Temperaturen deutlich unter Null Grad muß oft die gesamte Kameraelektronik mit hohem Energieeinsatz geheizt werden. Bei der Installation müssen mehrere Komponenten auf einem oft 4 m hohen Mast installiert und verdrahtet werden; zur Inbetriebnahme ist eine Ausrichtung der Scheinwerfer relativ zur Kamerablickrichtung bei Nacht erforderlich; bei Infrarotbeleuchtung führt die bei üblicher Objektiven vorhandene Fokusverschiebung zwischen sichtbarem und infrarotem Licht meist dazu, daß auch der Fokus des Kameraobjektivs aufwendig nachts justiert werden muß.

Der Erfindung liegt die Aufgabe zugrunde, ein Gerät zu konzipieren, welches eine Videoüberwachung mit Infrarotbeleuchtung bei geringem Energieverbrauch ermöglicht.

Diese Aufgabe wird erfindungsgemäß durch den Gegenstand des Anspruch 1 gelöst. Vorteilhaft Ausbildungen sind Gegenstand von Unteransprüchen.

Erfindungsgemäß sind Videokamera und Infrarotscheinwerfer derart zu einer Einheit integriert, daß die Verlustwärme des Scheinwerfers zur Heizung der Videokamera und der Frontscheibe eingesetzt werden kann.

In einer besonders vorteilhaften Ausführung wird dies dadurch erreicht, daß Videokamera, Infrarotscheinwerfer und Stromversorgung in ein gemeinsames, insbesondere wetterfestes Gehäuse integriert werden.

Durch eine geeignete Schaltung des Infrarotscheinwerter unter Verwendung eines Temperaturfühlers wird der IR-Scheinwerfer bei tieferen Temperaturen automatisch - unabhängig von einer evtl. vorhandenen Steuerung des Scheinwerfers entsprechend der Helligkeit (Dämmerungsschalter) - eingeschaltet. Somit ist durch die Verlustwärme des Scheinwerfers eine Heizung der Kamera bzw. der Scheibe vor der Kamera gegeben. Im häufigsten Falle einer nächtlichen tiefen Temperatur wird, da dann der Scheinwerfer ohnehin benötigt wird, die erforderliche Heizung somit ohne jeden zusätzlichen Energieverbrauch erzielt.

In einer vorteilhaften Ausführung wird der durch einmalige Justierung ermittelte optimale Verkippungswinkel zwischen Scheinwerferachse und Kamerablickrichtung - der insbesondere vom Öffnungswinkel des Objektives und der Abstrahlcharakteristik des Scheinwerfers abhängt - durch geeignete konstruktive Maßnahmen fest eingestellt und arretiert.
Dadurch ist eine Ausrichtung des Gesamtgeräts nur anhand der Kamerablickrichtung, und somit bei Tageslicht, möglich.
Bei tagsüber entsprechend dem Kamerabild ausgerichtetem Gerät (z.B. Horizont im oberen 1/5 des Bildes) ist durch die bauliche Fixierung der Scheinwerferachse relativ zur Kamerablickrichtung automatisch auch eine optimale Ausrichtung des integrierten Scheinwerfers gegeben. Eine Ausrichtung bei Nacht ist nun nicht mehr nötig.

Zur Vermeidung der Notwendigkeit einer nächtlichen Fokuseinstellung ist die Scheibe des Gerätes als IR-Filter ausgeführt, welches nur Licht im IR-Bereich durchlässt. Hierdurch sieht die Kamera auch tagsüber im IR-Bereich, wodurch keine Verschiebung zwischen der Fokuseinstellung bei Tageslicht und der bei Infrarotbeleuchtung auftritt. Somit wird eine Fokusjustage tagsüber möglich.

Insgesamt wird durch die Erfindung somit eine Videoüberwachung mit Infrarotbeleuchtung bei geringerem Aufwand und Kosten, mit einfachster Installation und ohne die Notwendigkeit nächtlicher Ausrichtung und Justage ermöglicht. Die Erfindung eignet sich insbesondere für die Überwachung von Außenanlagen, z.B. Zäunen.

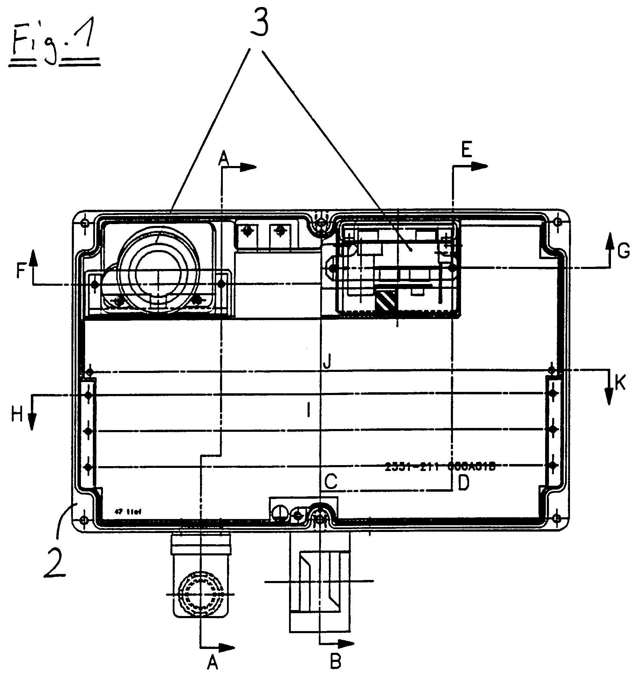

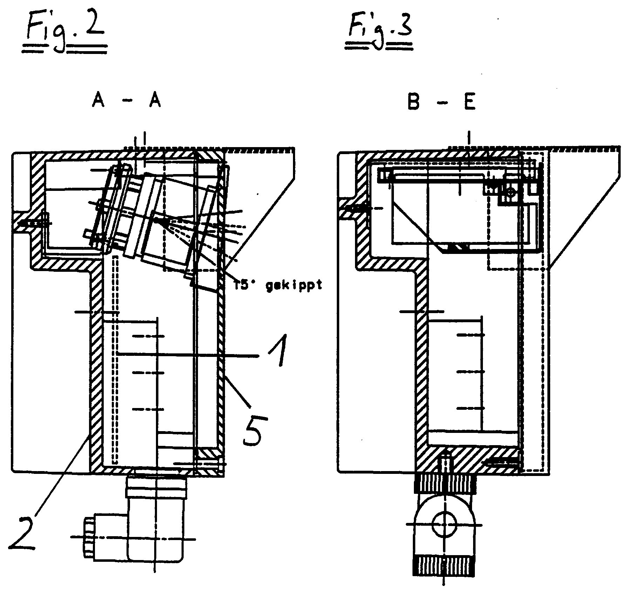

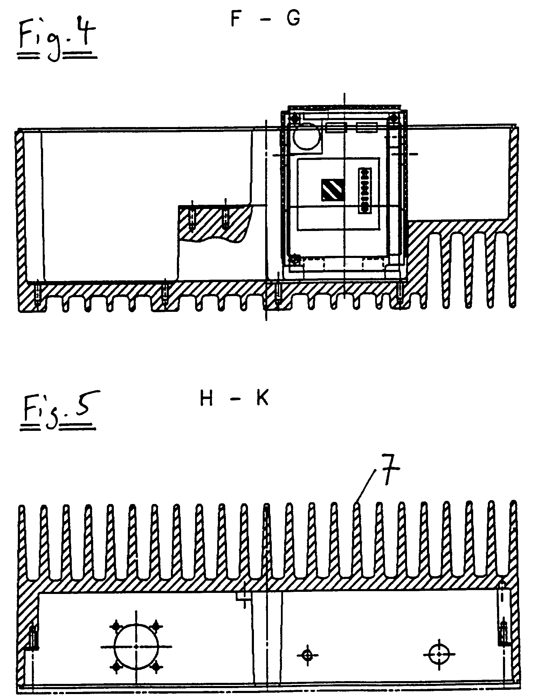

Die Erfindung wird mit Hilfe von Fig. 1 bis 5 näher erläutert. Sie zeigen ein Ausführungsbeispiel der Erfindung, wobei die Fig. 2 bis 5 Schnittdarstellungen der in Fig. 1 gezeigten Vorrichtung enthalten.

Dargestellt ist eine in einem Gehäuse 2 integrierte Kamera- und Infrarotbeleuchtungseinheit für die Überwachung von Außenanlagen. Als Infrarotscheinwerfer dient hier ein Halbleiter-LED-Scheinwerfer, dessen Platine 1 den überwiegenden Bauraum des verwendeten Aluminium-Gehäuses 2 mit integrierten Kühlrippen 7 einnimmt. Oben im Gehäuse 2 ist die Kamera mit Objektiv (links) und Elektronik (rechts) eingebaut. Der Kippwinkel zwischen Kamera- und Scheinwerferachse beträgt 150°. Die Frontscheibe 5 ist gleichzeitig als Infrarotfilter ausgeführt.

Zur Scheinwerfereinschaltung unterhalb einer bestimmten Temperatur dient eine üblich Schaltung bestehend aus Temperatursensor und Schwellwertschalter. Die Stromversorgung der Kamera ist in die Platine des LED Scheinwerfers integriert.

## Patentansprüche

1. Überwachungseinrichtung, insbesondere für Außenanlagen, mit IR-Scheinwerfer (1) und Videokamera (3), **dadurch gekennzeichnet**, daß IR-Scheinwerfer (1) und Videokamera (3) derart baulich integriert sind, daß die Verlustwärme des Scheinwerfers zur Heizung der Videokamera (3) und der Frontscheibe (5) eingesetzt wird.

2. Überwachungseinrichtung nach Anspruch 1, **dadurch gekennzeichnet**, daß mittels eines Temperaturfühlers bei Unterschreiten eines vorgegebenen Werts der Außentemperatur, und zwar auch tagsüber und unabhängig von einem evtl. vorhandenen Dämmerungsschalter, der IR-Scheinwerfer (1) einschaltet wird.

3. Überwachungseinrichtung nach einem der vorangehenden Ansprüche, **dadurch gekennzeichnet**, daß zwischen der Achse der Videokamera (3) und des IR-Scheinwerfers (1) eine vorgegebene Verkippung in vertikaler Richtung derart besteht, daß bei entsprechender Ausrichtung an Hand der Horizontlage im Videobild der Kamera (3) automatisch eine optimale Ausleuchtung durch den IR-Scheinwerfer (1) eingestellt ist.

4. Überwachungseinrichtung nach einem der vorhergehenden Ansprüche, **dadurch gekennzeichnet**, daß vor dem Kameraobjektiv ein nur im infraroten Licht transparenter Filter positioniert ist.

5. Überwachungseinrichtung nach einem der vorangehenden Ansprüche, **dadurch gekennzeichnet**, daß Videokamera (3), IR-Scheinwerfer (1) sowie die Stromversorgungseinheit in einem gemeinsamen Gehäuse (2) integriert sind.

6. Überwachungseinrichtung nach Anspruch 5, **dadurch gekennzeichnet**, daß der Infrarotfilter in die Frontabdeckung des Gehäuses (2) integriert ist.
